# EUROPEAN PATENT SPECIFICATION

(11) **EP 4 379 293 B1**
(45) Date of publication and mention of the grant of the patent: **28.01.2026**
(21) Application number: 22848157.8
(22) Date of filing: 27.06.2022
(51) Int. Cl.: F25D 23/12, F25D 11/00, F25D 29/00, A23L 5/30

(54) **REFRIGERATOR WITH ULTRASOUND-ASSISTED PROCESSING DEVICE**
KÜHLSCHRANK MIT ULTRASCHALLGESTÜTZTER VERARBEITUNGSVORRICHTUNG
RÉFRIGÉRATEUR AVEC UN DISPOSITIF DE TRAITEMENT ASSISTÉ PAR ULTRASONS

(30) Priority: 29.07.2021 CN 202110866345
(43) Date of publication of application: 05.06.2024
(73) Proprietor: QINGDAO HAIER REFRIGERATOR CO., LTD., Qingdao, Shandong 266101 (CN); HAIER SMART HOME CO., LTD., Qingdao, Shandong 266101 (CN)
(72) Inventor: ZHAO, Bintang, Qingdao, Shandong 266101 (CN); ZHANG, Peng, Qingdao, Shandong 266101 (CN); WANG, Jing, Qingdao, Shandong 266101 (CN); WANG, Liyan, Qingdao, Shandong 266101 (CN); JI, Lisheng, Qingdao, Shandong 266101 (CN); FEI, Bin, Qingdao, Shandong 266101 (CN)
(74) Representative: Winter, Brandl - Partnerschaft mbB
(86) International application number: PCT/CN2022/101563
(87) International publication number: WO 2023/005550

(56) References cited:
- CN-A- 101 929 786
- CN-A- 110 960 062
- CN-U- 202 485 326
- CN-U- 203 274 401
- US-A- 5 803 099
- US-A1- 2008 047 287

## Description

### TECHNICAL FIELD

The present invention relates to the technical field of refrigerators, and in particular to a refrigerator with an ultrasound-assisted processing device.

### BACKGROUND ART

Currently, the evaluation of a refrigerator for storage performance is no longer a simple extension of a storage time. Some users have also demanded the realization of certain auxiliary functions (such as auxiliary pickling, auxiliary cleaning, etc.).

To meet these demands, in the prior art, numerous improvement schemes have emerged. For instance, incorporating ultrasonic processing equipment within a storage compartment of the refrigerator. However, in such solutions, due to the need for an ultrasonic transducer in the ultrasonic processing equipment to be driven by an AC signal from the ultrasonic transducer's center, which carries a high voltage, there's a risk of electric shock if a user accidentally touches it or if a short circuit occurs, necessitating adequate protection.

Document CN203274401U discloses a refrigerator with an ultrasound-assisted processing device within a compartment of the refrigerator.

Moreover, to prevent the ultrasonic processing equipment from overheating during operation, it is necessary to frequently start and stop the ultrasonic processing equipment. Current solutions use relays to control the power supply, but the lifespan of relays cannot meet requirements, and the ultrasonic processing equipment is prone to damage, thus requiring further improvement.

### SUMMARY OF THE INVENTION

In a first aspect, an objective of the present invention is to address safety concerns regarding electric shock from an ultrasound-assisted processing device.

In the first aspect, a further objective of the present invention is to avoid frequent closing and opening of relays, ensuring the lifespan of the relays.

Particularly, the present invention provides a refrigerator with an ultrasound-assisted processing device, including:
a first signal detection device, configured to detect placement status of the ultrasound-assisted processing device and to output a first detection signal corresponding to the placement status;
a second signal detection device, configured to detect open/close status of a door of the refrigerator, and to output a second detection signal corresponding to the open/close status of a door ;
a third signal detection device, configured to detect the functional selection status of the ultrasound-assisted processing device, and to output a third detection signal corresponding to the functional selection status; and
an ultrasonic control device, configured to acquire detection results of the first detection signal, the second detection signal, and the third detection signal, and upon determining that the ultrasound-assisted processing device is properly placed, the door is closed, and the function of the ultrasound-assisted processing device is selected, to control power supply to the ultrasound-assisted processing device.

Alternatively, the ultrasonic control device includes a main control board and a relay, the main control board is connected to the ultrasound-assisted processing device through the relay, configured to control the relay to close after determining that the ultrasound-assisted processing device is properly placed, the door is closed, and the function of the ultrasound-assisted processing device is selected.

Alternatively, a signal processing module is integrated on the main control board, an input end of the signal processing module is respectively connected to sending end of the first signal detection device, the second signal detection device, and the third signal detection device, and an output end of the signal processing module is connected to the relay.

Alternatively, the ultrasound-assisted processing device includes an ultrasonic generator and an ultrasonic transducer, one end of the ultrasonic generator is connected to the relay, and the other end is connected to the ultrasonic transducer, configured to be controlled to send a driving signal to the ultrasonic transducer after the relay closes.

Alternatively, a control pin is set inside the ultrasonic generator, the control pin is connected to the main control board through a first wiring, the first wiring is configured to transmit a start-stop signal sent by the main control board to the control pin, thus enabling the ultrasonic generator to selectively send the driving signal to the ultrasonic transducer based on the start-stop signal.

Alternatively, the control pin is also connected to the main control board through a second wiring, the second wiring is configured to send a fault signal generated by the ultrasonic generator to the main control board, thus enabling the main control board to control the relay to disconnect.

Alternatively, the ultrasonic control device also includes an optocoupler, an input end of the optocoupler is connected to the main control board, and an output end is connected to the ultrasonic generator.

Alternatively, the optocoupler is integrated on the main control board, or integrated on the ultrasonic generator, or placed between the main control board and the ultrasonic generator.

Alternatively, an isolation transformer is set between the ultrasonic generator and the ultrasonic transducer, the driving signal generated by the ultrasonic generator is output through the isolation transformer.

Alternatively, the ultrasound-assisted processing device also includes a processing container, the ultrasonic transducer is fixed to a bottom of the processing container, and a grounding wire is connected to an outer shell of the processing container.

In the present invention, the refrigerator with the ultrasound-assisted processing device, by integrating with user's usage scenarios, utilizing the first signal detection device, the second signal detection device, and the third signal detection device to detect the placement status of the ultrasound-assisted processing device, the open/close status of the door of the refrigerator, and the functional selection status of the ultrasound-assisted processing device respectively. Power is supplied to the ultrasound-assisted processing device by the ultrasonic control device only when all three conditions are met: the ultrasound-assisted processing device is properly placed, the door is closed, and the function of the ultrasound-assisted processing device is selected. Thus realizing multi-layer power supply control, effectively guaranteeing user safety.

Further, in the present invention, the refrigerator with the ultrasound-assisted processing device, by equipping the ultrasound-assisted processing device with a control pin and sending the start signal from the main control board to the control pin while the relay remains closed, the ultrasonic generator can selectively send the driving signal to the ultrasonic transducer based on the start-stop signal. This approach avoids frequent closing and opening of the relay0, ensuring the lifespan of the relay.

The aforesaid and other objectives, advantages and features of the present invention will be more apparent to those skilled in the art from the following detailed description of the specific embodiments of the present invention with reference to the accompanying drawings.

### BRIEF DESCRIPTION OF THE DRAWINGS

Various other advantages and benefits will be apparent to those of ordinary skill in the art by reading detailed descriptions of the preferred embodiments below. The accompanying drawings are only for the purpose of illustrating the preferred embodiments and shall not be construed as limitations to the present invention. In addition, the same reference numbers are used to represent the same components throughout the drawings, in which:
FIG. 1 is a schematic structural diagram of a refrigerator according to an embodiment of the present invention;
FIG. 2 is a schematic structural diagram of an ultrasound-assisted processing device according to an embodiment of the present invention;
FIG. 3 is a schematic structural diagram of an ultrasound-assisted processing device according to another embodiment of the present invention; and
FIG. 4 is a schematic block diagram of the refrigerator with the ultrasound-assisted processing device according to the embodiment of the present invention.

### DETAILED DESCRIPTION

Exemplary embodiments of the present disclosure will be described in more detail below with reference to the accompanying drawings. However, although the exemplary embodiments of the present disclosure are shown in the drawings, it should be understood that the present disclosure may be implemented in various ways and shall not be limited by the embodiments set forth herein. On the contrary, these embodiments are provided for more thorough understanding of the present disclosure, and can fully convey the scope of the present disclosure to those skilled in the art.

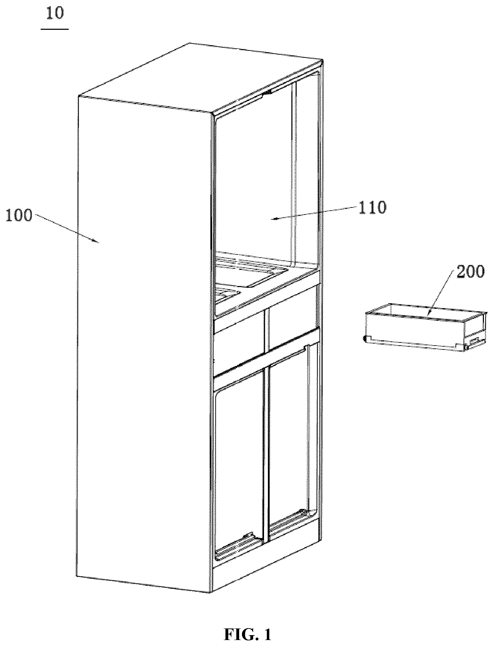

FIG. 1 is a schematic structural diagram of a refrigerator 10 according to an embodiment of the present invention. The refrigerator 10 may generally include a cabinet 100, and one or more storage compartments 110 are formed in the cabinet 100. The storage compartments 110 may be configured to form a refrigerated storage space 110, a frozen storage space 110, a variable temperature storage space 110 and the like according to refrigerating temperatures. Specifically, the number, functions and layout of the storage compartments 110 may be configured as required.

An ultrasound-assisted processing device 200 is located within the storage compartment 110. In this embodiment, the ultrasound-assisted processing device 200 is located within the refrigerated storage space 110. Of course, in other cases, the ultrasound-assisted processing device 200 can also be located within the frozen storage space or the variable temperature storage space. The functions of the ultrasound-assisted processing device 200 include, but are not limited to, assisting in pickling, freezing and the like. The ultrasound-assisted processing device 200 can be mounted in the form of a drawer in the refrigerated storage space or directly placed in the refrigerated storage space.

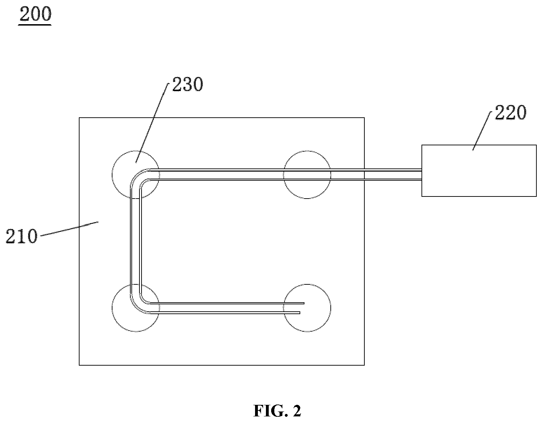

FIG. 2 is a schematic structural diagram of the ultrasound-assisted processing device 200 according to an embodiment of the present invention. The ultrasound-assisted processing device 200 at least includes, a processing container 210, an ultrasonic generator 220, an ultrasonic transducer 230, and an ultrasonic base 240 (not shown in FIG. 2), where the ultrasonic base 240 can be placed inside the refrigerated storage space. The processing container 210 is positioned on the ultrasonic base 240 to hold food items to be processed. The ultrasonic transducer 230 can be located at a bottom of the processing container 210, and the ultrasonic generator 220 can be placed at the back of the refrigerator 10, electrically connected to the ultrasonic transducer 230, providing a driving signal to cause the ultrasonic transducer 230 to vibrate. Since the working principle of the ultrasound-assisted processing device 200 is known to those skilled in the art, it is not further elaborated here.

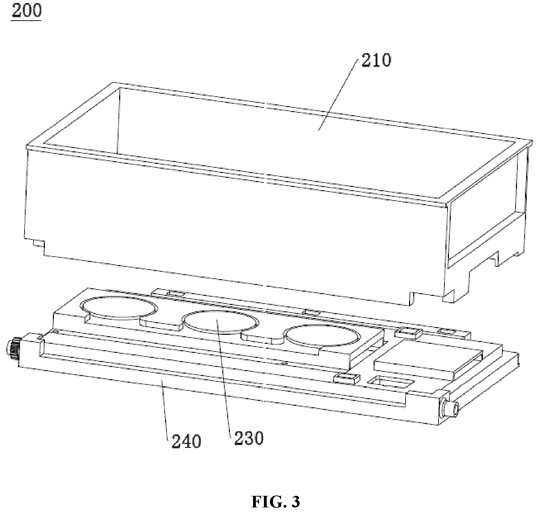

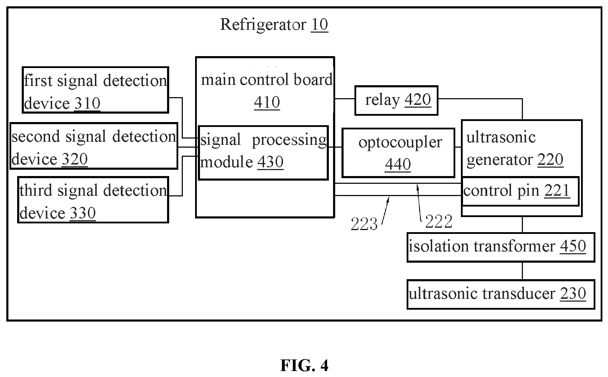

FIG. 3 is a schematic structural diagram of an ultrasound-assisted processing device according to another embodiment of the present invention; and FIG. 4 is a schematic block diagram of the refrigerator with the ultrasound-assisted processing device according to the embodiment of the present invention. Referencing FIG. 3 and FIG. 4, the refrigerator 10 in this embodiment may also include a first signal detection device 310, a second signal detection device 320, a third signal detection device 330, and an ultrasonic control device. The first signal detection device 310 is configured to detect placement status of the ultrasound-assisted processing device 200 and to output a first detection signal corresponding to the placement status. The second signal detection device 320 is configured to detect open/close status of a door of the refrigerator 10 and to output a second detection signal corresponding to the open/close status of a door. The third signal detection device 330 is configured to detect functional selection status of the ultrasound-assisted processing device 200 and to output a third detection signal corresponding to the functional selection status. The ultrasonic control device is configured to acquire detection results of the first detection signal, the second detection signal, and the third detection signal, and upon determining that the ultrasound-assisted processing device 200 is properly placed, the door is closed, and the function of the ultrasound-assisted processing device 200 is selected, to control power supply to the ultrasound-assisted processing device 200.

In the present invention, the refrigerator 10 with the ultrasound-assisted processing device 200, by integrating with user's usage scenarios, utilizing the first signal detection device 310, the second signal detection device 320, and the third signal detection device 330 to detect the placement status of the ultrasound-assisted processing device 200, the open/close status of the door of the refrigerator 10, and the functional selection status of the ultrasound-assisted processing device 200 respectively. Power is supplied to the ultrasound-assisted processing device 200 by the ultrasonic control device only when all three conditions are met: the ultrasound-assisted processing device 200 is properly placed, the door is closed, and the function of the ultrasound-assisted processing device 200 is selected. Thus realizing multi-layer power supply control, effectively guaranteeing user safety.

In an optional embodiment, the ultrasonic control device may include a main control board 410 and a relay 420. The main control board 410 is connected to the ultrasound-assisted processing device 200 through the relay 420. It is configured to control the relay 420 to close after determining that the ultrasound-assisted processing device 200 is properly placed, the door is closed, and the function of the ultrasound-assisted processing device 200 is selected. In other words, the main control board 410 controls the relay 420 to close only after the user has placed the ultrasound-assisted processing device 200 correctly, closed the door of the refrigerator 10, and selected the function of the ultrasound-assisted processing device 200. If any of these conditions are not met, the main control board 410 will not supply power. In this way, it can be ensured that there is no risk of electric shock during normal use.

In a preferred embodiment, the main control board 410 integrates a signal processing module 430, the signal processing module 430 may be a versus gate chip integrated on the main control board 410. Its input end is connected to sending ends of the first signal detection device 310, the second signal detection device 320, and the third signal detection device 330 respectively, and its output end is connected to the relay 420. Through the signal processing module 430, the placement status of the ultrasound-assisted processing device 200, the open/close status of the door, and the functional selection status of the ultrasound-assisted processing device 200 can be accurately identified, avoiding powering the ultrasound-assisted processing device 200 when the ultrasound-assisted processing device 200 is not placed, the door is not closed, or the function of the ultrasound-assisted processing device 200 is not selected.

The first signal detection device 310, the second signal detection device 320, and the third signal detection device 330 can all be implemented using Hall switches, mechanical switches, reed switches, etc. For example, the first signal detection device 310 can be located inside the storage compartment 110 of the refrigerator 10, specifically on the ultrasonic base 240 of the ultrasound-assisted processing device 200. The second signal detection device 320 can be placed on the door or on a trim corresponding to the door. The third signal detection device 330 can be located on a display board of the refrigerator 10, and selecting the function of the ultrasound-assisted processing device 200 can be done through the display board.

Considering the operation of the ultrasound-assisted processing device 200 within the refrigerator 10 and to avoid overheating and damage, it is necessary to frequently start and stop the ultrasound-assisted processing device 200, which requires frequent closing and opening of the relay 420. For instance, the ultrasound-assisted processing device 200 operates in accordance with a start-up ratio cycle of 10S on and 20S off, such frequent switching of the relay 420 could severely shorten its lifespan, failing to meet usage requirements. Therefore, to solve this problem, in this embodiment, one end of the ultrasonic generator 220 is connected to the relay 420, and the other end is connected to the ultrasonic transducer 230. The closing of relay 420 merely ensures continuous power supply to the ultrasonic generator 220, The ultrasonic generator 220 may also be configured to be controlled to send a drive signal to the ultrasonic transducer 230.

In a preferred embodiment, the ultrasonic generator 220 is equipped with a control pin 221. A first wiring 222 connects the control pin 221 to the main control board 410. The first wiring 222 is configured to transmit a start-stop signal from the main control board 410 to the control pin 221, enabling the ultrasonic generator 220 to selectively send the driving signal to the ultrasonic transducer 230 based on the start-stop signal.

Further, a second wiring 223 connects the control pin 221 to the main control board 410, the second wiring 223 is configured to transmit a fault signal generated by the ultrasonic generator 220 to the main control board 410, allowing the main control board 410 to disconnect the relay 420. For example, if the ultrasonic generator 220 experiences excessive current or overheating, the ultrasonic generator 220 can generate the fault signal. Once the fault signal is fed back to the main control board 410, the main control board 410 controls the relay 420 to disconnect promptly, stopping the power supply to the ultrasonic generator 220 to prevent damage to the ultrasonic generator 220.

The ultrasonic control device may also include an optocoupler 440, the optocoupler 440 is integrated on the main control board 410, or integrated on the ultrasonic generator 220, or placed between the main control board 410 and the ultrasonic generator 220. Its input end is connected to the main control board 410, and its output end is connected to the ultrasonic generator 220, preventing voltage interference between the main control board 410 and the ultrasonic generator 220 and ensuring the normal operation of the ultrasonic generator 220.

Further, an isolation transformer 450 is placed between the ultrasonic generator 220 and the ultrasonic transducer 230. The driving signal generated by the ultrasonic generator 220 is output through the isolation transformer 450, isolating the input and output voltages of the ultrasonic generator 220 by the isolation transformer 450. Even if a user accidentally touches the output voltage, an electric shock circuit cannot be formed, ensuring user safety.

Finally, a grounding wire can be added to an outer shell of the processing container 210 (not shown in the figures), making the outer shell of the processing container 210 completely non-conductive and preventing the risk of electric shock. Additionally, in case of leakage, the presence of the grounding wire ensures that the human body and the ground are at the same potential, preventing electric shock and further ensuring user safety.

Based on any of the optional embodiments or a combination of multiple optional embodiments described above, the embodiments of the present invention can achieve the following beneficial effects:

In the present invention, the refrigerator 10 with the ultrasound-assisted processing device 200, by integrating with user's usage scenarios, utilizing the first signal detection device 310, the second signal detection device 320, and the third signal detection device 330 to detect the placement status of the ultrasound-assisted processing device 200, the open/close status of the door of the refrigerator 10, and the functional selection status of the ultrasound-assisted processing device 200 respectively. Power is supplied to the ultrasound-assisted processing device 200 by the ultrasonic control device only when all three conditions are met: the ultrasound-assisted processing device 200 is properly placed, the door is closed, and the function of the ultrasound-assisted processing device 200 is selected. Thus realizing multi-layer power supply control, effectively guaranteeing user safety.

Further, in the present invention, the refrigerator 10 with the ultrasound-assisted processing device 200, by equipping the ultrasound-assisted processing device 200 with a control pin 221 and sending the start signal from the main control board 410 to the control pin 221 while the relay 420 remains closed, the ultrasonic generator 220 can selectively send the driving signal to the ultrasonic transducer 230 based on the start-stop signal. This approach avoids frequent closing and opening of the relay 420, ensuring the lifespan of the relay 420.

Therefore, those skilled in the art should appreciate that although multiple exemplary embodiments of the present invention have been illustrated and described in detail, many other variations or modifications that accord with the principle of the present invention may be still determined or derived directly from the content disclosed by the present invention. The present invention is defined by the appended claims.

## Claims

1. A refrigerator (10) with an ultrasound-assisted processing device (200) within a storage compartment (110) of the refrigerator (10), comprising:
a first signal detection device (310), configured to detect placement status of the ultrasound-assisted processing device (200) and to output a first detection signal corresponding to the placement status;
a second signal detection device (320), configured to detect open/close status of a door of the refrigerator (10), and to output a second detection signal corresponding to the open/close status of a door ;
a third signal detection device (330), configured to detect the functional selection status of the ultrasound-assisted processing device (200), and to output a third detection signal corresponding to the functional selection status; and
an ultrasonic control device, configured to acquire detection results of the first detection signal, the second detection signal, and the third detection signal, and upon determining that the ultrasound-assisted processing device (200) is properly placed, the door is closed, and the function of the ultrasound-assisted processing device (200) is selected, to control power supply to the ultrasound-assisted processing device (200).

2. The refrigerator (10) according to claim 1, wherein:
the ultrasonic control device comprises a main control board (410) and a relay (420), the main control board (410) is connected to the ultrasound-assisted processing device (200) through the relay (420), configured to control the relay (420) to close after determining that the ultrasound-assisted processing device (200) is properly placed, the door is closed, and the function of the ultrasound-assisted processing device (200) is selected.

3. The refrigerator (10) according to claim 2, wherein:
a signal processing module (430) is integrated on the main control board (410), an input end of the signal processing module (430) is respectively connected to sending end of the first signal detection device (310), the second signal detection device (320), and the third signal detection device, and an output end of the signal processing module (430) is connected to the relay (420).

4. The refrigerator (10) according to claim 2, wherein:
the ultrasound-assisted processing device (200) comprises an ultrasonic generator (220) and an ultrasonic transducer (230), one end of the ultrasonic generator (220) is connected to the relay (420), and the other end is connected to the ultrasonic transducer (230), configured to be controlled to send a driving signal to the ultrasonic transducer (230) after the relay (420) closes.

5. The refrigerator (10) according to claim 4, wherein:
a control pin (221) is set inside the ultrasonic generator (220), the control pin (221) is connected to the main control board (410) through a first wiring (222), the first wiring (222) is configured to transmit a start-stop signal sent by the main control board (410) to the control pin (221), thus enabling the ultrasonic generator (220) to selectively send the driving signal to the ultrasonic transducer (230) based on the start-stop signal.

6. The refrigerator (10) according to claim 5, wherein:
the control pin (221) is also connected to the main control board (410) through a second wiring (223), the second wiring (223) is configured to send a fault signal generated by the ultrasonic generator (220) to the main control board (410), thus enabling the main control board (410) to control the relay (420) to disconnect.

7. The refrigerator (10) according to claim 2, wherein:
the ultrasonic control device also comprises an optocoupler (440), an input end of the optocoupler (440) is connected to the main control board (410), and an output end is connected to the ultrasonic generator (220).

8. The refrigerator (10) according to claim 7, wherein:
the optocoupler (440) is integrated on the main control board (410), or integrated on the ultrasonic generator (220), or placed between the main control board (410) and the ultrasonic generator (220).

9. The refrigerator (10) according to claim 4, wherein:
an isolation transformer (450) is set between the ultrasonic generator (220) and the ultrasonic transducer (230), the driving signal generated by the ultrasonic generator (220) is output through the isolation transformer (450).

10. The refrigerator (10) according to claim 4, wherein:
the ultrasound-assisted processing device (200) also comprises a processing container (210), the ultrasonic transducer (230) is fixed to a bottom of the processing container (210), and a grounding wire is connected to an outer shell of the processing container (210).

## Patentansprüche

1. Kühlschrank (10) mit einer ultraschallgestützten Verarbeitungsvorrichtung (200) innerhalb eines Lagerfachs (110) des Kühlschranks (10); mit
einer ersten Signalerfassungsvorrichtung (310), die dazu eingerichtet ist, einen Platzierungsstatus der ultraschallgestützten Verarbeitungsvorrichtung (200) zu erfassen und ein erstes Erfassungssignal auszugeben, das dem Platzierungsstatus entspricht;
einer zweiten Signalerfassungsvorrichtung (320), die dazu eingerichtet ist, einen Öffnungs-/Schließstatus einer Tür des Kühlschranks (10) zu erfassen und ein zweites Erfassungssignal auszugeben, das dem Öffnungs-/Schließstatus einer Tür entspricht;
einer dritten Signalerfassungsvorrichtung (330), die dazu eingerichtet ist, einen Funktionsauswahlstatus der ultraschallgestützten Verarbeitungsvorrichtung (200) zu erfassen und ein drittes Erfassungssignal auszugeben, das dem Funktionsauswahlstatus entspricht; und
einer Ultraschallsteuervorrichtung, die dazu eingerichtet ist, Erfassungsergebnisse des ersten Erfassungssignals, des zweiten Erfassungssignals und des dritten Erfassungssignals zu erfassen und, nach Feststellung, dass die ultraschallgestützte Verarbeitungsvorrichtung (200) ordnungsgemäß platziert ist, die Tür geschlossen ist und die Funktion der ultraschallgestützten Verarbeitungsvorrichtung (200) ausgewählt ist, eine Leistungszufuhr zu der ultraschallgestützten Verarbeitungsvorrichtung (200) zu steuern.

2. Kühlschrank (10) nach Anspruch 1, wobei die Ultraschallsteuervorrichtung eine Hauptsteuerplatine (410) und ein Relais (420) aufweist, wobei die Hauptsteuerplatine (410) über das Relais (420) mit der ultraschallgestützten Verarbeitungsvorrichtung (200) verbunden ist, wobei die Hauptsteuerplatine (410) dazu eingerichtet ist, das Relais (420) zum Schließen zu steuern, nachdem festgestellt wurde, dass die ultraschallgestützte Verarbeitungsvorrichtung (200) ordnungsgemäß platziert ist, die Tür geschlossen ist und die Funktion der ultraschallgestützten Verarbeitungsvorrichtung (200) ausgewählt ist.

3. Kühlschrank (10) nach Anspruch 2, wobei ein Signalverarbeitungsmodul (430) auf der Hauptsteuerplatine (410) integriert ist, wobei ein Eingangsende des Signalverarbeitungsmoduls (430) jeweils mit einem Sendeende der ersten Signalerfassungsvorrichtung (310), der zweiten Signalerfassungsvorrichtung (320) und der dritten Signalerfassungsvorrichtung verbunden ist und ein Ausgangsende des Signalverarbeitungsmoduls (430) mit dem Relais (420) verbunden ist.

4. Kühlschrank (10) nach Anspruch 2, wobei die ultraschallgestützte Verarbeitungsvorrichtung (200) einen Ultraschallgenerator (220) und einen Ultraschallwandler (230) aufweist, wobei ein Ende des Ultraschallgenerators (220) mit dem Relais (420) verbunden ist und das andere Ende mit dem Ultraschallwandler (230) verbunden ist, der dazu eingerichtet ist, so gesteuert zu werden, dass er nachdem das Relais (420) schließt, ein Ansteuerungssignal an den Ultraschallwandler (230) sendet.

5. Kühlschrank (10) nach Anspruch 4, wobei ein Steuerpin (221) innerhalb des Ultraschallgenerators (220) angeordnet ist, wobei der Steuerpin (221) über eine erste Verdrahtung (222) mit der Hauptsteuerplatine (410) verbunden ist, wobei die erste Verdrahtung (222) dazu eingerichtet ist, ein Start-Stopp-Signal, das von der Hauptsteuerplatine (410) gesendet wird, an den Steuerpin (221) zu übertragen, wodurch es dem Ultraschallgenerator (220) ermöglicht wird, selektiv das Ansteuerungssignal auf der Grundlage des Start-Stopp-Signals an den Ultraschallwandler (230) zu senden.

6. Kühlschrank (10) nach Anspruch 5, wobei der Steuerpin (221) auch über eine zweite Verdrahtung (223) mit der Hauptsteuerplatine (410) verbunden ist, wobei die zweite Verdrahtung (223) dazu eingerichtet ist, ein von dem Ultraschallgenerator (220) erzeugtes Fehlersignal an die Hauptsteuerplatine (410) zu senden, wodurch es der Hauptsteuerplatine (410) ermöglicht wird, das Relais (420) zum Trennen zu steuern.

7. Kühlschrank (10) nach Anspruch 2, wobei die Ultraschallsteuervorrichtung ferner einen Optokoppler (440) aufweist, wobei ein Eingangsende des Optokopplers (440) mit der Hauptsteuerplatine (410) verbunden ist und ein Ausgangsende mit dem Ultraschallgenerator (220) verbunden ist.

8. Kühlschrank (10) nach Anspruch 7, wobei der Optokoppler (440) auf der Hauptsteuerplatine (410) integriert ist oder auf dem Ultraschallgenerator (220) integriert ist oder zwischen der Hauptsteuerplatine (410) und dem Ultraschallgenerator (220) platziert ist.

9. Kühlschrank (10) nach Anspruch 4, wobei ein Trenntransformator (450) zwischen dem Ultraschallgenerator (220) und dem Ultraschallwandler (230) angeordnet ist, wobei das von dem Ultraschallgenerator (220) erzeugte Ansteuerungssignal über den Trenntransformator (450) ausgegeben wird.

10. Kühlschrank (10) nach Anspruch 4, wobei die ultraschallgestützte Verarbeitungsvorrichtung (200) ferner einen Verarbeitungsbehälter (210) aufweist, wobei der Ultraschallwandler (230) an einer Unterseite des Verarbeitungsbehälters (210) befestigt ist und ein Erdungsdraht mit einer Außenhülle des Verarbeitungsbehälters (210) verbunden ist.

## Revendications

1. Réfrigérateur (10) avec un dispositif de traitement assisté par ultrasons (200) à l'intérieur d'un compartiment de stockage (110) du réfrigérateur (10), comprenant :
un premier dispositif de détection de signal (310), configuré pour détecter l'état de placement du dispositif de traitement assisté par ultrasons (200) et pour émettre un premier signal de détection correspondant à l'état de placement ;
un deuxième dispositif de détection de signal (320), configuré pour détecter l'état d'ouverture/de fermeture d'une porte du réfrigérateur (10), et pour émettre un deuxième signal de détection correspondant à l'état d'ouverture/de fermeture d'une porte ;
un troisième dispositif de détection de signal (330), configuré pour détecter l'état de sélection fonctionnelle du dispositif de traitement assisté par ultrasons (200), et pour émettre un troisième signal de détection correspondant à l'état de sélection fonctionnelle ; et
un dispositif de commande à ultrasons, configuré pour acquérir les résultats de détection du premier signal de détection, du deuxième signal de détection et du troisième signal de détection, et après avoir déterminé que le dispositif de traitement assisté par ultrasons (200) est correctement placé, la porte est fermée et la fonction du dispositif de traitement assisté par ultrasons (200) est sélectionnée, pour commander l'alimentation électrique du dispositif de traitement assisté par ultrasons (200).

2. Réfrigérateur (10) selon la revendication 1, dans lequel :
le dispositif de commande à ultrasons comprend une carte de commande principale (410) et un relais (420), la carte de commande principale (410) est connectée au dispositif de traitement assisté par ultrasons (200) par le relais (420), configurée pour demander au relais (420) de se fermer après avoir déterminé que le dispositif de traitement assisté par ultrasons (200) est correctement placé, la porte est fermée et la fonction du dispositif de traitement assisté par ultrasons (200) est sélectionnée.

3. Réfrigérateur (10) selon la revendication 2, dans lequel :
un module de traitement de signal (430) est intégré sur la carte de commande principale (410), une extrémité d'entrée du module de traitement de signal (430) est respectivement connectée à l'extrémité d'envoi du premier dispositif de détection de signal (310), du deuxième dispositif de détection de signal (320) et du troisième dispositif de détection de signal, et une extrémité de sortie du module de traitement de signal (430) est connectée au relais (420).

4. Réfrigérateur (10) selon la revendication 2, dans lequel :
le dispositif de traitement assisté par ultrasons (200) comprend un générateur d'ultrasons (220) et un transducteur d'ultrasons (230), une extrémité du générateur d'ultrasons (220) est connectée au relais (420), et l'autre extrémité est connectée au transducteur d'ultrasons (230), configurée pour devoir envoyer un signal d'entraînement au transducteur d'ultrasons (230) après la fermeture du relais (420).

5. Réfrigérateur (10) selon la revendication 4, dans lequel :
une broche de commande (221) est placée à l'intérieur du générateur d'ultrasons (220), la broche de commande (221) est connectée à la carte de commande principale (410) par un premier câblage (222), le premier câblage (222) est configuré pour transmettre un signal de démarrage-arrêt envoyé par la carte de commande principale (410) à la broche de commande (221), permettant ainsi au générateur d'ultrasons (220) d'envoyer sélectivement le signal d'entraînement au transducteur d'ultrasons (230) sur la base du signal de démarrage-arrêt.

6. Réfrigérateur (10) selon la revendication 5, dans lequel :
la broche de commande (221) est également connectée à la carte de commande principale (410) par un second câblage (223), le second câblage (223) est configuré pour envoyer un signal de défaut généré par le générateur d'ultrasons (220) à la carte de commande principale (410), permettant ainsi à la carte de commande principale (410) de commander la déconnexion du relais (420).

7. Réfrigérateur (10) selon la revendication 2, dans lequel :
le dispositif de commande à ultrasons comprend également un optocoupleur (440), une extrémité d'entrée de l'optocoupleur (440) est connectée à la carte de commande principale (410), et une extrémité de sortie est connectée au générateur d'ultrasons (220).

8. Réfrigérateur (10) selon la revendication 7, dans lequel :
l'optocoupleur (440) est intégré sur la carte de commande principale (410), ou intégré sur le générateur d'ultrasons (220), ou placé entre la carte de commande principale (410) et le générateur d'ultrasons (220).

9. Réfrigérateur (10) selon la revendication 4, dans lequel :
un transformateur d'isolement (450) est placé entre le générateur d'ultrasons (220) et le transducteur d'ultrasons (230), le signal d'entraînement généré par le générateur d'ultrasons (220) est émis par le transformateur d'isolement (450).

10. Réfrigérateur (10) selon la revendication 4, dans lequel :
le dispositif de traitement assisté par ultrasons (200) comprend également un récipient de traitement (210), le transducteur d'ultrasons (230) est fixé au fond du récipient de traitement (210), et un fil de mise à la terre est connecté à une coque extérieure du récipient de traitement (210).
